# EUROPEAN PATENT APPLICATION

(11) **EP 4 228 044 A1**
(43) Date of publication of application: **16.08.2023**
(21) Application number: 22887494.7
(22) Date of filing: 21.10.2022
(51) Int. Cl.: H01M 10/058, H01M 10/44, H01M 10/052

(54) **ACTIVATION METHOD FOR SECONDARY BATTERY**

(30) Priority: 27.10.2021 KR 20210144212
(71) Applicant: LG Energy Solution, Ltd., Seoul 07335 (KR)
(72) Inventor: LEE, Jung Mi, Daejeon 34122 (KR); CHA, In Young, Daejeon 34122 (KR); SUNG, Nak Gi, Daejeon 34122 (KR)
(74) Representative: Goddar, Heinz J.
(86) International application number: PCT/KR2022/016102
(87) International publication number: WO 2023/075298

(57) **Abstract**

A secondary battery activation method, which calculates an appropriate initial charge rate (SOC) and a high-temperature aging time according to the size of the secondary battery during the activation process, and in the case of an activation process using the same, by efficiently removing gas generated inside an electrode assembly while charging, provides an effect of improving the charging uniformity of an electrode in a subsequent charging stage and increasing the usable capacity of the battery.

## Description

### [Technical Field]

This application claims the benefit of a priority based on Korean Patent Application No. 10-2021-0144212, filed on October 27, 2021, and the entire contents of the Korean patent application are incorporated herein by reference.

The present invention relates to a secondary battery activation method, and more specifically, to a method for discharging gas inside a secondary battery during an activation process of the secondary battery.

### [Background Technology of the Invention]

In general, secondary batteries, unlike primary batteries that cannot be charged, mean batteries that can be charged and discharged, and are widely used in electronic devices such as mobile phones, laptops, computers, camcorders, etc., or electric vehicles. In particular, since lithium secondary batteries have a higher capacity than nickel-cadmium batteries or nickel-hydrogen batteries and have a higher energy density per unit weight, the degree of utilization thereof is rapidly increasing.

These lithium secondary batteries mainly use lithium-based oxides and carbon materials as cathode active materials and anode active materials, respectively. A lithium secondary battery has an electrode assembly in which a cathode plate and an anode plate respectively coated with a cathode active material and an anode active material are disposed with a separation membrane therebetween, and an exterior material for sealing and accommodating the electrode assembly together with an electrolyte.

Meanwhile, lithium secondary batteries, depending on the shape of a battery case, can be classified into can-type secondary batteries in which an electrode assembly is embedded in a metal can, and pouch-type secondary batteries in which an electrode assembly is embedded in a pouch of an aluminum laminated sheet.

Secondary batteries are generally manufactured through a process in which an electrolyte in a liquid state, that is, an electrolyte solution, is injected when an electrode assembly is housed in a battery case, and then the battery case is sealed.

Such a secondary battery performs an activation process of charging and discharging before shipment. The conventional activation process generally proceeds in the order of pre-aging, primary charging, main aging, and defect inspection. After the primary charging, a gas trap phenomenon occurs due to the gas remaining inside the electrode assembly, and this causes a decrease in uniformity of the electrode and a high internal pressure inside the battery. As a result, a non-uniform charging phenomenon occurs, eventually causing a decrease in the performance of the battery. These problems can occur severely in cylindrical or prismatic batteries for which is difficult to apply a process to remove residual gas. Therefore, it is necessary to develop a secondary battery activation technology that improves battery efficiency by discharging gas inside of the secondary battery by improving the charging method in the activation stage of the conventional secondary battery manufacturing process.

### [Description of the Invention]

### [Technical Problem]

The present invention relates to a secondary battery activation method, and it is directed to provide a new secondary battery activation method that can perform initial charging in an appropriate SOC range and that can secure the maximum capacity of the secondary battery by efficiently removing the gas remaining inside the secondary battery

### [Technical Solution]

The present invention provides a secondary battery activation method. In an example, the secondary battery activation method includes: an initial charging stage that charges a manufactured secondary battery at a selected state of charge (SOC); and a degassing stage that discharges gas from the charged secondary battery, and the degassing stage further includes a high-temperature aging process performed at a temperature of 50°C to 80°C, and the selected SOC charged during the initial charging stage is determined by,
(a) for one or more type of secondary batteries with different initial charge SOCs, performs degassing by performing a high-temperature aging process at a temperature of 50°C to 80°C for 3 to 5 hours, and
(b) evaluating a discharge capacity for the one or more types of secondary batteries with different initial charge SOCs of (a) and selecting the SOC having a highest discharge capacity.

In a specific example, in the secondary battery activation method according to the present invention, a performance time of the high-temperature aging process of the degassing stage is a summation of: a heat-up time for the secondary battery to reach 98% of a maximum temperature when the secondary battery is charged with a current of 0.15C to 0.25C; and a hold-up time for maintaining 98% to 100% of the maximum temperature of the secondary battery.

In another specific example, in the secondary battery activation method according to the present invention, the one or more types of secondary batteries with different initial charge SOCs has the initial charge SOC range from 1% to 15%.

In another specific example, in the secondary battery activation method according to the present invention, a discharge capacity evaluation (b) is a method of discharging to SOC of 20% or less after a full charge.

In another example, in the secondary battery activation method according to the present invention, the degassing stage further includes a room temperature aging process after the high-temperature aging process, and the room-temperature aging process is held for 0.5 to 72 hours.

In another example, in the secondary battery activation method according to the present invention, the degassing stage, after the high-temperature aging process, further includes a process of charging to SOC of 60% to 70%.

In a specific example, in the secondary battery activation method according to the present invention, after the degassing stage, the secondary battery activation method further includes a process of charging the secondary battery to an SOC of 70% or more.

In another specific example, in the secondary battery activation method according to the present invention, after the stage of charging the secondary battery to the SOC of 70% or more, the secondary battery activation method further includes a stage of discharging the secondary battery to a level of SOC 20% or less.

In another specific example, in the secondary battery activation method according to the present invention, before the initial charging stage, the secondary battery is maintained at a SOC of 0% or more and less than 1%.

In an example, in the secondary battery activation method according to the present invention, before the degassing stage, the secondary battery activation method further includes a stage of forming a solid electrode interface (SEI) film on all or part of a surface of an anode of an electrode assembly of the secondary battery.

In another example, in the secondary battery activation method according to the present invention, the secondary battery has a structure in which an electrode assembly and an electrolyte are stored in a battery case, the electrode assembly has a structure including a positive electrode, a negative electrode, and a separation membrane interposed between the positive electrode and the negative electrode, and the electrolyte contains a lithium salt.

In another example, in the secondary battery activation method according to the present invention, the secondary battery is any one of a prismatic battery, a cylindrical battery, or a pouch-type battery.

### [Advantageous Effects]

According to the present invention, it provides a method for selecting an optimal SOC range during initial charging of a secondary battery, and when this method is applied, a passage for discharging gas generated inside an electrode assembly due to initial charging can be properly secured.

In addition, in a degassing stage for removing gas generated inside the electrode assembly of the initially charged secondary battery, by providing a method for calculating the optimal high-temperature aging time, the secondary battery to which this is applied prevents gas trap in the electrode assembly, improving charging uniformity, and as a result, usable capacity is increased and the battery failure rate can be reduced.

### [Brief Description of the Drawings]

FIG. 1 illustrates a result of evaluating a discharge capacity after initial charging of secondary batteries having a diameter of 21mm with different SOCs.
FIG. 2 illustrates a result of evaluating a discharge capacity depending on the high-temperature aging time after initial charging with respect to a secondary battery having a diameter of 21mm and initially charged under an SOC of 7%.
FIG. 3 depicts temperature changes over time in the process of charging a secondary battery having a diameter of 21mm and a secondary battery having a diameter of 46mm, respectively.
FIG. 4 shows a result of evaluating a discharge capacity after initial charging of secondary batteries having a diameter of 46mm with different SOCs.
FIG. 5 illustrates a result of evaluating a discharge capacity depending on the high-temperature aging time after initial charging with respect to a secondary battery having a diameter of 46mm and initially charged under an SOC of 9%.
FIG. 6 illustrates a result of evaluating a discharge capacity depending on the initial charging SOC and the high-temperature aging time of a secondary battery having a diameter of 46mm.

### [Best Mode for Carrying Out the invention]

Hereinafter, the present invention will be described in detail. First, terms and words used in this specification and claims should not be interpreted as limited to commonly used meanings or meanings in dictionaries and should be interpreted with meanings and concepts which are consistent with the technological scope of the invention based on the principle that the inventors have appropriately defined concepts of terms in order to describe the invention in the best way.

The present invention relates to a secondary battery activation method that performs a degassing stage including a high-temperature aging process after charging at a low SOC level, selects an appropriate SOC range, and calculates the performance time of a high-temperature aging process. SOC 0% in the disclosure means that the secondary battery capacity is all consumed, and SOC 100% means that the secondary battery capacity is maximally filled. It can be measured by selecting any one or more of known measurement methods such as the SOC chemical measurement method, the voltammetry method, the current integration method, the pressure measurement method, etc.

The present invention provides a secondary battery activation method. In an example, the secondary battery activation method according to the present invention may include an initial charging stage that charges a manufactured secondary battery; and a degassing stage that discharges gas from the charged secondary battery.

Here, the degassing stage may further include a high-temperature aging process performed at a temperature of 50°C to 80°C.

In addition, in terms of the SOC charged during the initial charging stage, perform degassing by performing a high-temperature aging process at a temperature of 50°C to 80°C for 3 to 5 hours for one or more types of secondary batteries with different initial charge SOCs, and evaluate the discharge capacity of the degassed product to get the SOC when the discharge capacity is the highest.

Meanwhile, due to the nature of secondary batteries, an activation process is necessarily performed during the first cycle to activate a positive electrode active material and create a Solid Electrode Interface (SEI) film on the negative electrode. During the activation process, a large amount of gas is generated inside the secondary battery. If the gas generated inside the secondary battery is not efficiently removed, the gas stays in a certain space inside the secondary battery, causing a gas trap phenomenon and leading to a high internal pressure. Structural deformation of the secondary battery is caused by the internal pressure, and it adversely effects on the battery performance and lifespan such as usable capacity, output, etc.

When the initial charge is performed at a predetermined SOC level, gas is generated inside the electrode assembly of the secondary battery, and a gas trap phenomenon can be prevented by degassing the gas generated to the outside of the electrode assembly by aging at a high temperature for a predetermined time in order to properly discharge the gas.

Therefore, it is important to select an appropriate SOC level during initial charging. If it does not reach the above appropriate SOC range, gas generation may not be sufficient, causing the gas to be generated again in the subsequent charging stage. On the other hand, if it exceeds the above appropriate SOC range, the thickness of the positive electrode and the negative electrode expands even more due to charging of the battery, so it is not easy to secure a passage for gas removal.

Moreover, when the size of the secondary battery increases or decreases, the amount of gas formed inside the secondary battery changes, so an appropriate SOC should be selected in consideration of the size of the secondary battery.

Meanwhile, when a secondary battery initially charged with an optimal SOC is degassed by performing a high-temperature aging, the amount of gas formed inside varies depending on the size of the secondary battery, so it is necessary to appropriately calculate the time required for the high-temperature aging process.

Accordingly, the inventors of the present invention confirmed that, the case of a secondary battery applied with an appropriate initial charging SOC required for the activation process of the secondary battery and aged under appropriate conditions necessary for performing high-temperature aging, which is one of the degassing stages, effectively discharged gas and showed a maximum discharge capacity, which confirmed the effect of improving the electrochemical activity of the battery, leading to the present invention.

First, an initial charging stage of charging the manufactured secondary battery will be described. The initial charging stage of charging the manufactured secondary battery is a stage of primary charging with a predetermined SOC.

Specifically, in the SOC selection in the initial charging stage, a high-temperature aging process performed at a temperature of 50°C to 80°C is performed for 3 to 5 hours to degas one or more types of secondary batteries having different initial charging SOCs, and the discharge capacity is evaluated for the result to select the SOC when the discharge capacity is the highest as the initial charging SOC.

More specifically, in one or more types of secondary batteries having different initial charge SOCs, the range of the initial charge SOC may be 1% to 15%. Specifically, the range of the initial charge SOC is 3% to 12%, or 5% to 10%. If the initial charging SOC range is too small, as described above, gas generation is not sufficient, and gas may be generated again in a subsequent charging stage. Conversely, if the initial charge SOC range is too high, the thickness of the electrode is excessively expanded, resulting in a problem in that a gas discharge passage inside the secondary battery cannot be easily secured.

In addition, the initial charging stage may be performed in a Constant Current (CC) mode. The intensity of the charging current during initial charging may be appropriately controlled within the range of 0.05C to 1C in consideration of the time required for the manufacturing process and to secure charging uniformity.

In addition, one or more types of secondary batteries having different initial charging SOCs can be degassed by performing a high-temperature aging process at a temperature of 50°C to 80°C for 3 to 5 hours.

The high-temperature aging process promotes the release of gas generated in the initial charging stage to the outside of the electrode assembly. Here, when the viscosity of the electrolyte is lowered and the fluidity is high, it is favorable to form a passage for gas discharge in the electrode assembly.

Here, the high-temperature aging process may be performed at a temperature of 50°C to 80°C. Preferably, it may be a temperature of 55°C to 70°C. If the temperature is less than 50°C, it is not easy to lower the viscosity of the electrolyte, making it difficult to form a gas passage. If the temperature exceeds 80°C, electrochemical elements such as electrolyte or electrode active material may be deteriorated, and it may bring about side reactions such as oxidation and reduction of electrolyte.

In addition, the high-temperature aging process may be performed for 3 to 5 hours. The high-temperature aging time may be appropriately increased or decreased depending on the temperature. If performed at elevated temperatures, it is desirable to proceed for a short time so that the electrochemical device is not excessively exposed to high temperatures. However, there is a need to secure a sufficient aging time because all the gas generated inside the electrode assembly may remain without being discharged if the aging time is too short. Therefore, the aging time can be appropriately set in consideration of the temperature and the release rate of the produced gas.

By aging one or more types of secondary batteries having different initial charging SOCs at a high temperature, the discharge capacity of the degassed product may be evaluated, and the SOC when the discharge capacity is the highest may be selected as the initial charging SOC.

Specifically, the discharge capacity evaluation may be a method of discharging to a level of SOC 20% or less after full charge (SOC 100%). As an example, the discharge may be performed up to SOC 0%. Here, the secondary battery may show a voltage of 2V to 46V. Through this charging and discharging stage, the maximum discharge capacity of the secondary battery can be measured, and the initial charging SOC of the secondary battery having the maximum discharge capacity may be selected as the SOC charged in the initial charging stage of the present invention.

In one example of the present invention, after selecting an optimal initial charging SOC through the discharge capacity evaluation, a degassing stage that discharges gas generated inside the electrode assembly of a secondary battery that has undergone the stage of initial charging with an optimal initial charging SOC may be included.

The degassing stage may further include a high-temperature aging process performed at a temperature of 50°C to 80°C. Here, the performing temperature of the high-temperature aging process, as described above, may be performed in the range of 50°C to 80°C in consideration of the viscosity and fluidity of the electrolyte.

Meanwhile, when the size of a secondary battery that has completed initial charging increases or decreases, a high-temperature aging time required to discharge gas formed inside the secondary battery may be different. Accordingly, there is a need to calculate an appropriate performance time of the high-temperature aging process.

Accordingly, in an example of the present invention, the performance time of the high-temperature aging process of the degassing stage, when charging the secondary battery with a current of 0.15C to 0.25C, may be a summation of a heat-up time for the secondary battery to reach 98% of the maximum temperature and a hold-up time for maintaining 98% to 100% of the maximum temperature of the secondary battery.

As described below, according to the evaluation results of the discharge capacity between the secondary battery aged at a high temperature for a time that is an addition of a heat-up time and a hold-up time and the secondary battery aged at a high temperature for an arbitrary time, it can be confirmed that the former case has a larger discharge capacity than the latter. Through this, when conditions including the size of the secondary battery are changed, there is an advantage in predicting an appropriate high-temperature aging performance time considering the discharge capacity of the battery by measuring the heat-up time and the hold-up time during the charging process of the secondary battery.

In another example of the present invention, the degassing stage may further include a room temperature process after the high-temperature aging process, and the room temperature aging process may be a process of waiting for 0.5 hour to 72 hours. Specifically, the room temperature may be performed in the form of storing the secondary battery at a temperature of 20°C to 30°C, or in the form of storing the secondary battery in a chamber configured to maintain room temperature.

In another example of the present invention, the degassing stage may further include a process of charging to SOC 60% to 70% after the high-temperature aging process. This may further improve the safety of the battery because gas that can be generated through additional charging can be discharged through the degassing process.

Meanwhile, a stage of charging to a range of 70% or more may be further included for the secondary battery in which the degassing process is completed. In this stage, the secondary battery may be charged to a range of SOC 70% or more. Preferably, it is charged to the range of SOC 70% to 100%, and the battery can be activated so that it can be normally driven by such charging.

In addition, the stage of discharging the secondary battery to a level of SOC 20% or less may be further included after the stage of charging the secondary battery to the range of SOC 70% or more. The discharge may be performed up to SOC 0%. Here, the secondary battery may exhibit a voltage of 2V to 46V. Through this discharging stage, the capacity of the battery can be selected, and the non-uniformity of current density due to a non-uniform distribution of the electrode active material can be prevented.

Meanwhile, in one example of the present invention, the secondary battery to which the initial charging stage is applied is not performed with charging process after electrolyte injection, and it is the charging that is first applied after electrolyte injection of the above stage.

In one example of the present invention, before the initial charge stage of charging the assembled secondary battery, the secondary battery may be maintained at SOC 0% or more and less than 1%. When the pre-charge is performed as described above, it is possible to suppress the elution of copper used as a negative electrode current collector by lowering the potential of a negative electrode, and as a result, it is effective in suppressing the occurrence of low voltage in the battery.

In another example of the present invention, before the degassing stage, a process of forming a Solid Electrode Interface (SEI) film on all or part of the negative electrode surface of the electrode assembly may be included. The formed SEI film serves to reduce the irreversibility of the secondary battery to a certain level even when it is charged at a high level in the degassing stage. This SEI film is formed on the surface of the negative electrode in the initial charging stage, for example, when the electrolyte contains ethylene carbonate (EC), which is a cyclic carbonate compound, an initial charging stage is required for a sufficient reduction of ethylene carbonate. Also, stabilization of the SEI film may be accelerated through the high-temperature aging process.

Meanwhile, 'activation' in the present specification is a process of supplying a consistent electricity to an electrode assembly or a battery cell that does not have electrical characteristics so that the positive electrode and the negative electrode can have electrical characteristics, and it can be understood as including all reactions accompanied by the initial charge. Non-limiting examples of reactions accompanied by the initial charge include activation of the negative electrode such as formation of an SEI film, partial charging of battery capacity, and lithiation of a carbon-based negative electrode active material.

In one example of the present invention, the secondary battery used in the activation method may be composed of one or more of those described below. The secondary battery has a structure including an electrode assembly including a positive electrode, a negative electrode, and a separation membrane interposed between the positive electrode and the negative electrode, an electrolyte for impregnating the electrode assembly, and a battery case containing an electrode assembly and a nonaqueous electrolyte. The nonaqueous electrolyte is, for example, an electrolyte containing lithium salt.

The positive electrode has a structure in which a positive electrode active material layer is stacked on one or both surfaces of a positive electrode current collector. In one example, the positive electrode active material layer includes a positive electrode active material, a conductive material, a binder polymer, etc., and if necessary, may further include a cathode additive commonly used in the art.

The positive electrode active material may be a lithium-containing oxide, and may be the same or different. As the lithium-containing oxide, a lithium-containing transition metal oxide may be used.

For example, lithium-containing transition metal oxides may be any one selected from the group consisting of, LiₓCoO₂(0.5<x<1.3), LiₓNiO₂(0.5<x<1.3), LiₓMnO₂(0.5<x<1.3), LiₓMn₂O₄(0.5<x<1.3), Liₓ(NiₐCo_{b}Mn_{c})O₂(0.5<x<1.3, 0<a<1, 0<b<1, 0<c<1, a+b+c=1), LiₓNi_{1-y}Co_{y}O₂(0.5<x<1.3, 0<y<1), LiₓCo_{1-y}Mn_{y}O₂(0.5<x<1.3,0:≤y<1), LiₓNi_{1-y}Mn_{y}O₂(0.5<x<1.3,0<y<1), Liₓ(NiₐCo_{b}Mn_{c})O₄(0.5<x<1.3, 0<a<2, 0<b<2, 0<c<2, a+b+c=2), LiₓMn_{2-z}Ni_{z}O₄(0.5<x<1.3, 0<z<2), LiₓMn_{2-z}Co_{z}O₄(0.5<x<1.3, 0<z<2), LiₓCoPO₄(0.5<x<1.3), and LiₓFePO₄(0.5<x<1.3), or a mixture of two or more of them. In addition, the lithium-containing transition metal oxide may be coated with a metal or metal oxide such as aluminum (Al). In addition, aside from the lithium-containing transition metal oxide, one or more of sulfide, selenide, and halide may be used.

The positive electrode active material may be included in the range of 94.0 to 98.5wt% in the positive electrode active material layer. When the content of the positive electrode active material satisfies the above range, it becomes advantageous in terms of manufacturing a high-capacity battery and providing positive electrode conductivity or adhesion between electrode materials.

The current collector used in the positive electrode is a metal with high conductivity, which can be easily adhered to the positive electrode active material slurry, and any metal that is nonreactive in the voltage range of the electrochemical device can be used. Specifically, non-limiting examples of the current collector for the positive electrode include an aluminum, a nickel, or a foil made of a combination thereof. The positive electrode active material layer further includes a conductive material.

As the conductive material, a carbon-based conductive material is widely used, and includes a sphere-type or a needle-type carbon-based conductive material. The sphere-type carbon-based conductive material, in a mixed state with a binder, fills pores, which are empty spaces between active material particles, to improve physical contact between active materials, thereby reducing interface resistance and improving adhesion between the lower positive electrode active material and the current collector.

Examples of the sphere-type carbon-based conductive material include carbon black including Denka Black, and examples thereof include FX35(Denka Co.), SB50L(Denka Co.), and Super-P, but are not limited thereto. Here, 'sphere-type' means having a spherical particle shape and having an average diameter (D50) of 10 to 500nm, specifically 15 to 100nm or 15 to 40nm.

As a meaning corresponding to the sphere-type carbon-based conductive material, there is a needle-type carbon-based conductive material. The needle-type carbon-based conductive material may be a carbon nanotube (CNT), a vapor-grown carbon fiber (VGCF), a carbon nanofiber (CNF), or a mixture of two or more of the above. Here, 'needle-type' means having a needle-like particle shape, for example, having an aspect ratio (value of length/diameter) in the range of 50 to 650, specifically 60 to 300 or 100 to 300.

The sphere-type carbon-based conductive material has an advantage in dispersion compared to the needle-type conductive material and has an effect of improving the insulating properties of the layer by having a lower electrical conductivity compared to the needle-type carbon-based conductive material.

The conductive material may be included in the range of 0.5 to 5wt% in the positive electrode active material layer. When the content of the conductive material satisfies the above range, there is an effect of providing a sufficient cathode conductivity and lowering the interface resistance between the current collector and the active material.

As in the binder polymer, the binder commonly used in the art may be used without limitation. For example, the binder may be a water-insoluble polymer that is soluble in organic solvents and insoluble in water, or a water-soluble polymer that is insoluble in organic solvents and soluble in water. Water-insoluble polymers may be one or more selected from the group consisting of polyvinylidene fluoride (PVDF), polyvinylidene chloride (PVDC), polyacrylonitrile (PAN), polypropylene oxide (PPO), polyethylene oxide-propylene oxide copolymer (PEO-PPO), polytetrafluoroethylene (PTFE), polyimide (PI), polyetherimide (PEI), styrene butadiene rubber (SBR), polyacrylate, and derivatives thereof.

Water-soluble polymers may be one or more selected from the group consisting of various cellulose derivatives such as carboxymethylcellulose (CMC), methylcellulose (MC), cellulose acetate phthalate (CAP), hydroxypropyl methylcellulose (HPMC), etc.

The content of the binder polymer is proportional to the content of the conductive material included in the upper positive electrode active material later and the lower positive electrode active material layer. This is to give adhesion to the conductive material having a relatively small particle size compared to the active material, because when the content of the conductive material increases, more binder polymers are required, and when the content of the conductive material decreases, less binder polymers can be used.

The negative electrode has a structure in which a negative electrode active material layer is stacked on one or both surfaces of a negative electrode current collector. In one example, the negative electrode active material layer includes a negative electrode active material, a conductive material, a binder polymer, etc., and if necessary, may further include an anode additive commonly used in the art.

The negative electrode active material may include a carbon material, a lithium metal, a silicon, or a tin, etc. When a carbon material is used as the negative electrode active material, both low crystalline carbon and high crystalline carbon may be used. Soft carbon and hard carbon are representative examples of low crystalline carbon, and a high-temperature baked carbon such as natural graphite, Kish graphite, pyrolytic carbon, mesophase pitch based carbon fiber, mesocarbon microbeads, mesophase pitches, and petroleum orcoal tarpitch derived cokes are representative examples of high crystalline carbon.

Non-limiting examples of the current collector for the negative electrode include a copper, a gold, a nickel, or a copper alloy, or a foil made of a combination thereof. The positive electrode active material layer further includes a conductive material. In addition, the current collector may be used by stacking substrates made of the above materials.

In addition, the negative electrode may include a conductive material and a binder commonly used in the related art.

Any porous substrate used in a lithium secondary battery can be used as a separation membrane, and for example, a polyolefin-based porous membrane or a nonwoven fabric can be used, but it is not particularly limited thereto.

Examples of the polyolefin-based porous membrane include polyethylene-based polymers such as a high-density polyethylene, a needle-type low-density polyethylene, a low-density polyethylene, and an ultra-high-molecular weight polyethylene alone, or a membrane formed of a polymer mixed with these substances.

Aside from the polyolefin-based nonwoven fabric, the nonwoven fabric includes, for example, polyethylene terephthalate, polybutylene terephthalate, polyester, polyacetal, polyamide, polycarbonate, polyimide, polyether ether ketone, polyether sulfone, polyphenylene oxide, polyphenylene sulfide, and polyethylene naphthalene alone, or a nonwoven fabric formed of a polymer mixed with these substances. The structure of the nonwoven fabric may be a spunbond nonwoven fabric composed of long fibers or a melt blown nonwoven fabric.

The thickness of the porous substrate is not particularly limited, but may be 5 to 50µm, and the pore size and porosity present in the porous substrate are also not particularly limited, but may be 0.01 to 50µm and 10 to 95%, respectively.

Meanwhile, a porous coating layer containing inorganic particles and a binder polymer may be further included on at least one surface of the porous substrate to improve the mechanical strength of the separation membrane composed of the porous substrate and to suppress a short circuit between the positive electrode and the negative electrode.

The electrolyte may include an organic solvent and an electrolyte salt, and the electrolyte salt is a lithium salt. As the lithium salt, those commonly used as non-aqueous electrolytes for lithium secondary batteries may be used without limitation. For example, it contains Li⁺ as a cation, and as an anion, it may contain at least any one of those selected from the group consisting of F⁻, Cl⁻, Br⁻, I⁻, NO³⁻, N(CN)²⁻, BF⁴⁻, ClO⁴⁻, AlO⁴⁻, AlCl⁴_{'}, PF⁶⁻, SbF⁶⁻, AsF⁶⁻, BF₂C₂O⁴⁻, BC₄O⁸⁻ , (CF₃)₂PF⁴⁻, (CF₃)₃PF³⁻, (CF₃)₄PF²⁻, (CF₃)₅PF⁻, (CF₃)₆P⁻, CF₃SO³⁻, C₄F₉SO³⁻, CF₃CF₂SO³⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO³', CF₃CO²⁻, CH₃CO²⁻, SCN⁻, and (CF₃CF₂SO₂)₂N⁻.

As the organic solvent contained in the above-described electrolyte, those commonly used as electrolyte for secondary batteries may be used without limitation, for example, ether, ester, amide, linear carbonate, cyclic carbonate and the like may be used alone or in combination of two or more. Among them, cyclic carbonates, linear carbonates, or a mixture of these, which is a carbonate compound, may be typically included.

A specific example of the cyclic carbonate compound is any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinyl ethylene carbonate, and their halides, or a mixture of two or more of them. These halides include, for example, fluoroethylene carbonate (FEC) and the like, but is not limited thereto.

In addition, specific examples of the linear carbonate compound include any one selected from the group consisting of dimethyl carbonate (DMC), diethyl carbonate (DEC), dipropyl carbonate, ethyl methyl carbonate (EMC), methyl propyl carbonate, and ethyl propyl carbonate, or a mixture of two or more of them may be used representatively, but is not limited thereto.

In particular, among the carbonate-based organic solvents, ethylene carbonate and propylene carbonate, which are cyclic carbonates, are high-viscosity organic solvents and have high permittivity so that lithium salts in the electrolyte can be better dissociated. When these cyclic carbonates are mixed with low-viscosity, low-permittivity linear carbonates such as dimethyl carbonate and diethyl carbonate in an appropriate ratio, it can make an electrolyte with a higher electrical conductivity.

In addition, as the ether in the organic solvent, any one selected from the group consisting of dimethyl ether, diethyl ether, dipropyl ether, methyl ethyl ether, methyl propyl ether, and ethyl propyl ether, or a mixture of two or more thereof may be used, but is not limited thereto.

And as the ester in the organic solvent, any one selected from the group consisting of methyl acetate, ethyl acetate, propyl acetate, methyl propionate, ethyl propionate, and propyl propionate, γ-butyrolactone, γ-valerolactone, γ-caprolactone, α-valerolactone, and β-caprolactone, or a mixture of two or more thereof may be used, but is not limited thereto.

The injection of the non-aqueous electrolyte may be performed at an appropriate stage during the manufacturing process of the electrochemical device depending on the manufacturing process of the final product and its required physical properties. That is, it may be applied before assembling the electrochemical device or at the final stage of assembling the electrochemical device.

In this case, the secondary battery includes a lithium secondary battery including a lithium metal secondary battery, a lithium-ion secondary battery, a lithium polymer secondary battery, or a lithium-ion polymer secondary battery. The secondary battery may include a cylindrical, a prismatic, or a pouch-type secondary battery depending on its shape.

### [Best Mode for Carrying Out the invention]

Hereinafter, the present invention will be described in detail. First, terms and words used in this specification and claims should not be interpreted as limited to commonly used meanings or meanings in dictionaries and should be interpreted with meanings and concepts which are consistent with the technological scope of the invention based on the principle that the inventors have appropriately defined concepts of terms in order to describe the invention in the best way.

### Manufacturing Example

A positive electrode active material (LiNi_{0.5}Co_{0.2}Mn_{0.3}O₂), a conductive material (carbon black), and a biner (PVDF) were added to N-methyl-2-pyrrolidine (NMP) at a weight ratio of 96:2:2, respectively, and mixed to prepare a cathode slurry, and the prepared cathode slurry was coated to a 20µm thick aluminum foil as a positive electrode current collector with a capacity of 3.1 mAh/cm² to prepare a positive electrode.

An artificial graphite, a conductive material (carbon black), and a binder (PVDF) were added to N-methyl-2-pyrrolidine (NMP) at a weight ratio of 96:2:2, respectively, and mixed to prepare an anode slurry, and the prepared anode slurry was coated to a 20µm thick copper foil as a negative electrode current collector with a capacity of 3.1 mAh/cm² to prepare a negative electrode. A jelly-roll type electrode assembly was manufactured by interposing a separation membrane (polyethylene material, thickness 20µm) between the positive electrode and the negative electrode. After the electrode assembly was loaded into a battery case, electrolyte was injected, and the battery case was sealed to manufacture a cylindrical secondary battery with a diameter of 21mm and a cylindrical secondary battery with a diameter of 46mm. The electrolyte was prepared by adding LiPF₆ at a concentration of 1.4M to an organic solvent of ethylene carbonate (EC), ethyl methyl carbonate (EMC), and dimethyl carbonate (DMC) in 20:20:60 (volume ratio). In addition, vinylene carbonate (3 vol%) and succinonitrile (1 vol%) were mixed in the electrolyte.

### Experimental Example 1

### Cylindrical secondary battery with a diameter of 21mm

A total of 6 secondary batteries (Examples 1 to 5 and Comparative Example 1) having a diameter of 21mm were manufactured through the above manufacturing example. The activation process of each cell was performed as follows. As shown in Table 1 below, the secondary batteries of Examples 1 to 5 were subjected to an initial charging stage and a degassing stage including a high-temperature aging (60°C, 4 hours) and a room temperature aging (12 hours). In the room temperature aging stage, addition charging was performed up to SOC 65%. Thereafter, stages of full charging to SOC 100% (4.2V) and discharging to SOC 0% (2.5V) were performed. The discharge was performed in 1C CC mode and 0.2C CV mode up to 2.5V. Meanwhile, in Comparative Example 1, the same processes as in Examples 1 to 5 were performed, except that the initial charging stage and the degassing stage through high-temperature aging were not performed as an existing process.

**[Table 1]**

| Category | Initial Charging (SOC, %) | High-temperature aging temperature(°C) | High-temperature aging time(hr) | Additional Charging (SOC, %) |
|---|---|---|---|---|
| Example 1 | 1 | 60 | 4 | 65 |
| Example 2 | 3 | 60 | 4 | 65 |
| Example 3 | 5 | 60 | 4 | 65 |
| Example 4 | 7 | 60 | 4 | 65 |
| Example 5 | 10 | 60 | 4 | 65 |
| Comparative Example 1 | 0 | Not implemented | Not implemented | 65 |

### Selecting initial charge SOC

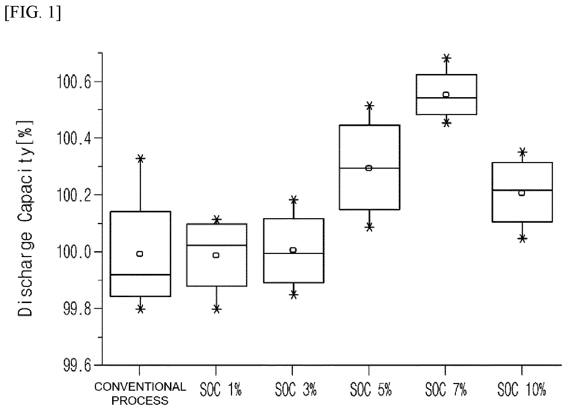

FIG. 1 is a graph showing the results of evaluating the discharge capacities of Examples 1 to 5 and Comparative Example 1. Referring to FIG. 1, as a result of evaluating the discharge capacity by manufacturing 3 identical secondary batteries in each of Examples 1 to 5 and Comparative Example 1, it was confirmed that in the case of Example 4, in which the initial charge was performed in the range of SOC 7%, the discharge capacity was superior to that of other Examples and Comparative Example. When the initial charge was in the range of SOC 1% or SOC 3%, it was confirmed that the discharge capacity was similar to that of the case without initial charge, and when the initial charge exceeded the appropriate level to an extent of SOC 10%, it was confirmed that the discharge capacity decreased.

### Discharge capacity evaluation according to high-temperature aging time

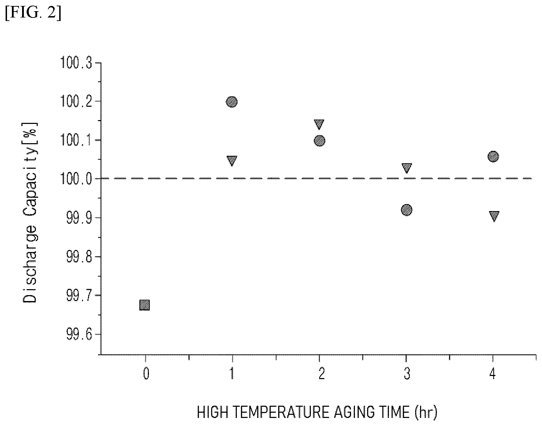

FIG. 2 is a graph showing the results of evaluating the discharge capacity according to the high-temperature aging time after initial charge for a secondary battery with a diameter of 21mm manufactured under a condition of initial charge SOC 7%. Referring to FIG. 2, the discharge capacity according to the high-temperature aging time after initial charge was evaluated for the secondary battery (Example 4) prepared under a condition of initial charge SOC 7%, and the results for the discharge capacities of the two identical secondary batteries can be checked by Table 2. Specifically, the aging temperature was set to 60°C, and the aging times were set to 0 hour, 1 hour, 2 hours, 3 hours, and 4 hours. According to this, it was confirmed that the maximum discharge capacity exceeded 100% when the aging time was 1 hour or 2 hours. However, when the aging time exceeded 2 hours, deterioration or side reactions of electrochemical devices was caused, leading to a tendency of decrease in discharge capacity. In addition, it was confirmed that the discharge capacity was the lowest when aging was not performed.

**[Table 2]**

| Category | High-temperature aging time(hr) | | | | |
|---|---|---|---|---|---|
| | Not implemented | 1-hour | 2-hour | 3-hour | 4-hour |
| Maximum Discharge Capacity(%) | 99.57 | 100.2 | 100.14 | 100.03 | 100.05 |
| Lowest Discharge Capacity(%) | 99.57 | 100.04 | 100.1 | 99.92 | 99.91 |

### Measuring heat-up time and hold-up time

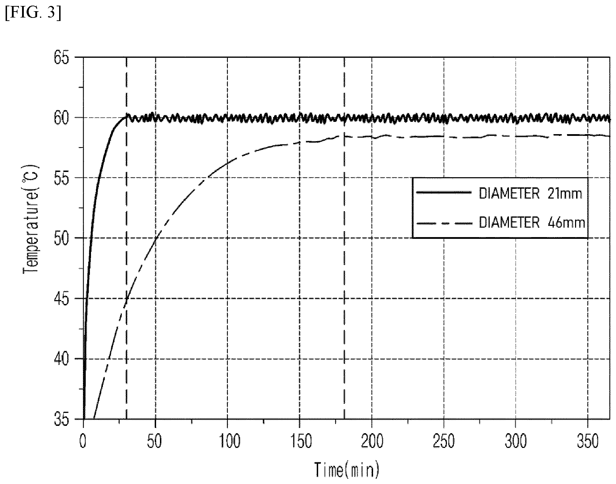

FIG. 3 is a diagram illustrating temperature rise profiles of a secondary battery with a diameter of 21mm and a secondary battery with a diameter of 46mm. Referring to FIG. 3, the heat-up time that takes to reach 98% of the maximum temperature (60°C) while charging a secondary battery with a diameter of 21mm with a current of 0.2C is about 30 minutes, and the hold-up time that takes to maintain 98% to 100% of the maximum temperature (60°C) was confirmed to be approximately 30 minutes. The difference between the time obtained by adding the heat-up time and the hold-up time (approx. 1 hour) and the high-temperature aging time (1 hour) showing the maximum discharge capacity in Table 2 was not big.

### Experimental Example 2

### Cylindrical secondary battery with a diameter of 46mm

A total of 3 cylindrical secondary batteries (Examples 6 to 8) having a diameter of 46mm were manufactured through the above manufacturing example. As shown in Table 3 below, an initial charging stage and a degassing stage including a high-temperature aging (60°C, 4 hours) and a room temperature aging (12 hours) were performed in each secondary battery. In the room temperature aging stage, addition charging was performed up to SOC 65%. Thereafter, stages of full charging to SOC 100% (4.2V) and discharging to SOC 0% (2.5V) were performed. The discharge was performed in 1C CC mode and 0.2C CV mode up to 2.5V.

**[Table 3]**

| Category | Initial Charging (SOC, %) | High-temperature aging temperature(°C) | High-temperature aging time(hr) | Additional Charging (SOC, %) |
|---|---|---|---|---|
| Example 6 | 5 | 60 | 4 | 65 |
| Example 7 | 7 | 60 | 4 | 65 |
| Example 8 | 9 | 60 | 4 | 65 |

### Selecting initial charge SOC

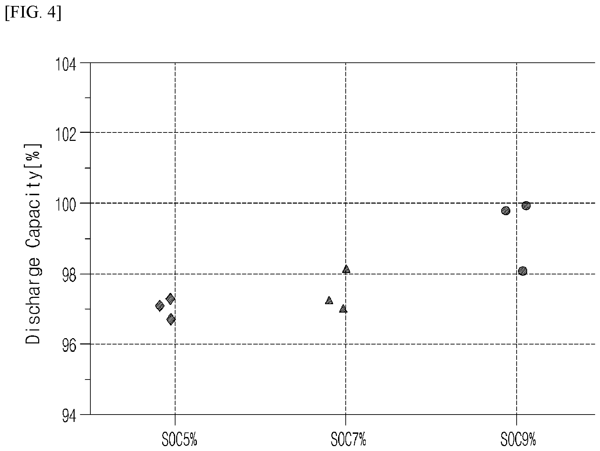

FIG. 4 is a graph illustrating the results of evaluating the discharge capacities of Examples 6 to 8. Referring to FIG. 4, as a result of evaluating the discharge capacity by manufacturing 3 identical secondary batteries in each of Examples 6 to 8, in the case of Example 8 in which the initial charge was performed in the range of SOC 9%, it was confirmed that its discharge capacity was superior to that of other Examples and Comparative Example.

### Estimating high-temperature aging time

FIG. 3 is a diagram illustrating temperature increase profiles of a secondary battery with a diameter of 21mm and a secondary battery with a diameter of 46mm. And Table 4 below shows the results of predicting the high-temperature aging performance time from the heat-up time that takes to reach 98% of the maximum temperature and the hold-up time that takes to maintain 98% to 100% of the maximum temperature. Referring to FIG. 3 and Table 4, it was confirmed that there is a 6-fold difference in heat-up time between the secondary battery with a diameter of 46mm and a maximum discharge capacity (Example 8) and the secondary battery with a diameter of 21mm and a maximum discharge capacity (Example 4). In addition, the hold-up time for the secondary battery with a diameter of 21mm and a maximum discharge capacity (Example 4) was confirmed to be 30 minutes. Through this, the hold-up time of the secondary battery with a diameter of 46mm and a maximum discharge capacity (Example 8) can be estimated as 3 hours, which is a sixfold difference as in the heat-up time. This is because the hold-up time increases proportionally to the increase in the heat-up time as the size of the battery increases.

Furthermore, as described above in Example 1, it can be confirmed that the difference between the time obtained by adding the heat-up time and the hold-up time and the high-temperature aging time representing the maximum discharge capacity is not big. From this, it can be estimated that the appropriate high-temperature aging time of the secondary battery with a diameter of 46mm and a maximum discharge capacity (Example 8) is 6 hours, which is the time obtained by adding the heat-up time and the hold-up time.

**[Table 4]**

| Category | Diameter(mm) | Maximum temperature(°C) | Heat-up time(hr) | Hold-up time(hr) | Estimated high-temperature aging time(hr) |
|---|---|---|---|---|---|
| Example 4 | 21 | 60 | Approx. 0.5 | 0.5 | 1 |
| Example 8 | 46 | 58.6 | 3 | 3 (estimated) | 6(estimated) |

### Discharge capacity evaluation according to high-temperature aging time

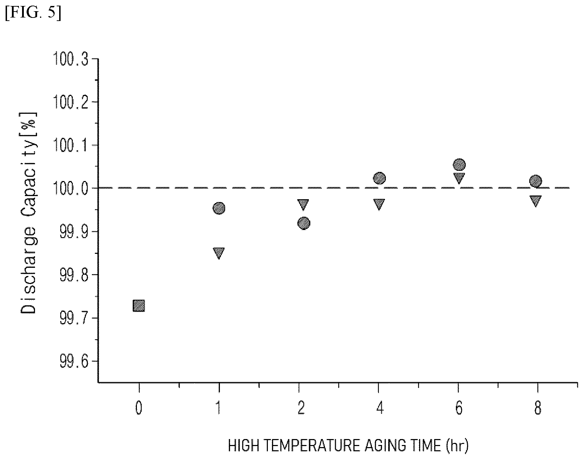

FIG. 5 is a graph showing the results of evaluating the discharge capacity according to the high-temperature aging time after initial charging for a secondary battery with a diameter of 46mm and an initial charging condition of SOC 9%. Referring to FIG. 5, the discharge capacity according to the high-temperature aging time after initial charge for the secondary battery manufactured under the condition of initial charge SOC 9% (Example 8) was evaluated, and the results for the discharge capacity of two identical secondary batteries can be confirmed through Table 5. Specifically, the aging temperature was set to 60°C, and the aging times were set to 0 hour, 1 hour, 2 hours, 4 hours, 6 hours, and 8 hours. According to this, it was confirmed that the maximum discharge capacity exceeded 100% when the aging time was 4 hours, 6 hours, or 8 hours, and among them, the aging time of 6 hours exhibited the greatest discharge capacity. Hereby, it was confirmed that it is consistent with the high-temperature aging time according to the previously estimated heat-up time and hold-up time.

**[Table 5]**

| Category | High-temperature aging time(hr) | | | | | |
|---|---|---|---|---|---|---|
| | Not implemented | 1-hour | 2-hour | 4-hour | 6-hour | 8-hour |
| Maximum Discharge Capacity(%) | 99.73 | 99.96 | 99.97 | 100.02 | 100.05 | 100.01 |
| Lowest Discharge Capacity(%) | 99.73 | 99.84 | 99.92 | 99.96 | 100.03 | 99.97 |

### Discharge capacity evaluation according to initial charge SOC and high-temperature aging time

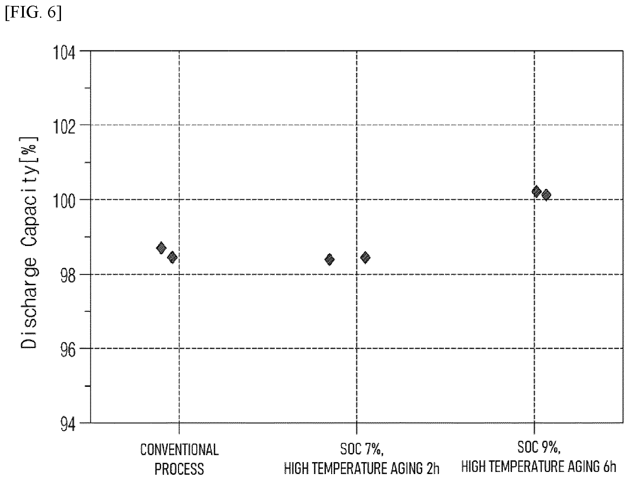

FIG. 6 is a graph showing the results of evaluating the discharge capacity according to the initial charge SOC and the high-temperature aging time of a secondary battery with a diameter of 46mm. Referring to FIG. 6, the initial charge SOC is in the range of 9%, and in the case of a secondary battery that has undergone a high-temperature aging process for 6 hours, it had initial charge SOC in the range of 7%, together with the secondary battery that has not gone through initial charging and high-temperature aging, and it was confirmed to have a higher discharge capacity than the secondary battery subjected to high-temperature aging for 2 hours.

Accordingly, when the diameter of the secondary battery changes, it is necessary to set an appropriate initial charge SOC and high-temperature aging time because the initial charge SOC with maximum discharge capacity and the high-temperature aging time may vary. According to the present invention, an appropriate initial charge SOC can be selected through discharge capacity evaluation when secondary batteries have different sizes, and an appropriate high-temperature aging time can be predicted by calculating the heat-up time and the hold-up time of the temperature increase profile. The secondary battery that has undergone such an activation process can secure maximum usable capacity by efficiently discharging gas generated inside the battery.

## Claims

1. A secondary battery activation method, comprising:
an initial charging stage of charging a manufactured secondary battery at a selected state of charge (SOC); and
a degassing stage of discharging gas from the charged secondary battery,
wherein the degassing stage further comprises a high-temperature aging process performed at a temperature of 50°C to 80°C, and
wherein the selected SOC charged during the initial charging stage is determined by,
(a) for one or more types of secondary batteries with different initial charge SOCs, perform degassing by performing a high-temperature aging process at a temperature of 50°C to 80°C for 3 to 5 hours, and
(b) evaluating a discharge capacity for the one or more types of secondary batteries with different initial charge SOCs of (a) and selecting the SOC having a highest discharge capacity.

2. The secondary battery activation method of claim 1, wherein a performance time of the high-temperature aging process of the degassing stage is a summation of:
a heat-up time for the secondary battery to reach 98% of a maximum temperature when the secondary battery is charged with a current of 0.15C to 0.25C; and
a hold-up time for maintaining 98% to 100% of the maximum temperature of the secondary battery.

3. The secondary battery activation method of claim 1, wherein the one or more types of secondary batteries with different initial charge SOCs has the initial charge SOC range from 1% to 15%.

4. The secondary battery activation method of claim 1, wherein a discharge capacity evaluation of (b) is a method of discharging to SOC 20% or less after a full charge.

5. The secondary battery activation method of claim 1, wherein the degassing stage further comprises a room temperature aging process after the high-temperature aging process, and
wherein the room-temperature aging process is held for 0.5 to 72 hours.

6. The secondary battery activation method of claim 1, wherein
the degassing stage, after the high-temperature aging process, further comprises a process of charging to SOC 60% to 70%.

7. The secondary battery activation method of claim 1, wherein, after the degassing stage, the secondary battery activation method further comprises a stage of charging the secondary battery to an SOC of 70% or more.

8. The secondary battery activation method of claim 7, wherein, after the stage of charging the secondary battery to the SOC of 70% or more, the secondary battery activation method further comprises a stage of discharging the secondary battery to a level of SOC 20% or less.

9. The secondary battery activation method of claim 1, wherein, before the initial charging stage, the secondary battery is maintained at a SOC of 0% or more and less than 1%.

10. The secondary battery activation method of claim 1, wherein, before the degassing stage, the secondary battery activation method further includes a stage of forming a solid electrode interface (SEI) film on all or part of a surface of an anode of an electrode assembly of the secondary battery.

11. The secondary battery activation method of claim 1, wherein the secondary battery has a structure in which an electrode assembly and an electrolyte are stored in a battery case,
wherein the electrode assembly has a structure comprising a positive electrode, a negative electrode, and a separation membrane interposed between the positive electrode and the negative electrode, and
wherein the electrolyte contains a lithium salt.

12. The secondary battery activation method of claim 1, wherein the secondary battery is any one of a prismatic battery, a cylindrical battery, or a pouch-type battery.
